(19) Europäisches Patentamt
European Patent Office
Office européen des brevets

(11) Veröffentlichungsnummer: **0 111 933**
A2

(12) **EUROPÄISCHE PATENTANMELDUNG**

(21) Anmeldenummer: **83112856.6**

(22) Anmeldetag: **21.12.83**

(51) Int. Cl.[3]: **C 08 G 77/46**
D 06 M 15/66

(30) Priorität: **23.12.82 DE 3247825**

(43) Veröffentlichungstag der Anmeldung:
**27.06.84 Patentblatt 84/26**

(84) Benannte Vertragsstaaten:
**AT BE CH DE FR GB IT LI NL SE**

(71) Anmelder: **WACKER-CHEMIE GMBH**
**Prinzregentenstrasse 22**
**D-8000 München 22(DE)**

(72) Erfinder: **Preiner, Gerhard, Dr. Dipl.-Chem.**
**Mehringer Strasse 56**
**D-8263 Burghausen(DE)**

(72) Erfinder: **Marwitz, Heinrich, Dr. Dipl.-Chem.**
**Marienberger Strasse 48f**
**D-8263 Burghausen(DE)**

(72) Erfinder: **Müller, Johann**
**Friedrich-Eberth-Strasse 3**
**D-8263 Burghausen(DE)**

(72) Erfinder: **Ullrich, Kurt**
**Bonifaz-Huber-Strasse 10**
**D-8263 Burghausen(DE)**

(72) Erfinder: **Huhn, Karl, Dr. Dipl.-Chem.**
**Bachstrasse 16**
**D-8263 Burghausen(DE)**

(54) **Organopolysiloxane mit SiC-gebundenen Oxyalkyleneinheiten, Verfahren zu ihrer Herstellung und eine Verwendung dieser Organopolysiloxane.**

(57) Die neuen Organopolysiloxane mit SiC-gebundenen Oxyalkyleneinheiten und Si-gebundenen Hydroxylgruppen enthalten durchschnittlich mindestens 15 Molprozent Siloxaneinheiten mit nur einem SiC-gebundenen, einwertigen organischen Rest, wobei die anders als durch diesen Rest abgesättigten Siliciumvalenzen durch Siloxansauerstoffatome oder Sauerstoffatome von Hydroxylgruppen abgesättigt sind. Vorzugsweise werden solche Organopolysiloxane dadurch hergestellt, daß durch Triorganosiloxygruppen endblockiertes Organopolysiloxan aus Diorganosiloxaneinheiten, wobei mindestens ein Teil dieser Einheiten SiC-gebundene Oxyalkyleneinheiten enthält, und gegebenenfalls Organohydrogensiloxaneinheiten oder Organohydroxysiloxaneinheiten oder Organoalkoxysiloxaneinheiten oder einem Gemisch aus mindestens zwei solcher Monoorganosiloxyeinheiten mit Wasser in Gegenwart von Base oder Säure umgesetzt und gegebenenfalls gleichzeitig mit der Umsetzung mit Wasser oder anschließend zusätzlich mit Siloxaneinheiten mit nur einem SiC-gebundenen, einwertigen organischen Rest lieferndem Silan oder dessen Teilhydrolysat umgesetzt wird. Die neuen Organopolysiloxane werden vorzugsweise zum Hydrophilieren von Textilfasern durch Auftragen auf die hydrophil zu machenden Fasern verwendet.

EP 0 111 933 A2

W A C K E R - C H E M I E
G m b h

München, den 26.11.1982
PAT/Dr.Ru/hu
Wa 8229-S

# Organopolysiloxane mit SiC-gebundenen Oxyalkyleneinheiten, Verfahren zu ihrer Herstellung und eine Verwendung dieser Organopolysiloxane

Organopolysiloxane mit SiC-gebundenen Oxyalkyleneinheiten und Si-gebundenen Hydroxylgruppen sind bereits bekannt. Hierzu wird z. B. auf EP-OS 0 032 310, veröffentlicht 22. Juli 1981, Union Carbide Corporation, und DE-OS 30 39 721, veröffentlicht 27. Mai 1982, Wacker-Chemie GmbH (entsprechend: US Ser. No. 2 95 950, G. Preiner et al.) verwiesen. Derartige Organopolysiloxane machen Unterlagen, die damit überzogen sind und auf denen diese Organopolysiloxane vernetzt sind, hydrophil, d. h. mehr oder weniger rasch und leicht mit Wasser benetzbar. Aus der 2. Tabelle von Beispiel 1-2 der genannten EP-OS ist jedoch ersichtlich, daß mit den Organopolysiloxanen gemäß dieser EP-OS bei Fasern aus 100% Polyester keine befriedigende Benetzbarkeit durch Wasser erzielt wird.

Es ist Aufgabe der Erfindung, Organopolysiloxane mit SiC-gebundenen Oxyalkyleneinheiten und Si-gebundenen Hydroxylgruppen bereitzustellen, die durch Kondensation vernetzbar sind und nicht nur bei Unterlagen, die mindestens zum Teil aus natürlichen Fasern, wie Baumwolle, bestehen, sondern auch bei Unterlagen, deren Faseranteil zu 100% aus Synthesefasern, wie Polyester, besteht, besonders leichte Benetzbarkeit durch Wasser bewirken, die gegen Reinigen mit Wasser oder organischem Lösungsmittel besonders beständig ist, ohne

andere erwünschte Eigenschaften der Fasern, wie weichen Griff und Elastizität, merklich zu beeinträchtigen. Diese Aufgabe wird durch die Erfindung gelöst.

Gegenstand der Erfindung sind Organopolysiloxane mit SiC-gebundenen Oxyalkyleneinheiten und Si-gebundenen Hydroxylgruppen, dadurch gekennzeichnet, daß sie durchschnittlich mindestens 15 Molprozent Siloxaneinheiten mit nur einem SiC-gebundenen, einwertigen organischen Rest, wobei die anders als durch diesen Rest abgesättigten Siliciumvalenzen durch Siloxansauerstoffatome oder Sauerstoffatome von Hydroxylgruppen abgesättigt sind, enthalten.

Die Siloxaneinheiten mit nur einem SiC-gebundenen, einwertigen organischen Rest, wobei die anders als durch diesen Rest abgesättigten Siliciumvalenzen durch Siloxansauerstoffatome oder Sauerstoffatome von Hydroxylgruppen abgesättigt sind, können durch die Formeln

$$R\ SiO_{3/2}$$

$$R\ Si(OH)O \quad \text{und}$$

$$R\ Si(OH)_2O$$

wiedergegeben werden, wobei R jeweils gleiche oder verschiedene, einwertige organische Reste bedeutet.

Vorzugsweise enthalten die erfindungsgemäßen, erfindungsgemäß hergestellten und erfindungsgemäß verwendeten Organopolysiloxane durchschnittlich höchstens 60 Molprozent Siloxaneinheiten mit nur einem SiC-gebundenen, einwertigen organischen Rest, wobei die anders als durch diesen Rest abgesättigten Siliciumvalenzen durch Siloxansauerstoffatome

oder Sauerstoffatome von Hydroxylgruppen abgesättigt sind.

Die anderen Siloxaneinheiten als solche mit nur einem SiC-gebundenen, einwertigen organischen Rest, wobei die anders als durch diesen Rest abgesättigten Siliciumvalenzen durch Siloxansauerstoffatome oder Sauerstoffatome von Hydroxylgruppen abgesättigt sind, in den erfindungsgemäßen, erfindungsgemäß hergestellten und erfindungsgemäß verwendeten Organopolysiloxanen sind vorzugsweise solche der Formeln

$$R_2SiO$$
$$R_2Si(OH)O \quad \text{oder}$$
$$R_3SiO_{1/2}$$

sowie gegebenenfalls auch $SiO_{4/2}$ oder $Si(OH)O_{3/2}$, wobei R jeweils die oben dafür angegebene Bedeutung hat.

Damit die erfindungsgemäßen, erfindungsgemäß hergestellten und erfindungsgemäß verwendeten Organopolysiloxane SiC-gebundene Oxyalkyleneinheiten enthalten, muß natürlich mindestens ein Teil der in diesen Organopolysiloxanen SiC-gebundenen organischen Reste und damit auch der Reste R Oxyalkyleneinheiten enthalten. Dabei sind als Reste mit Oxyalkyleneinheiten solche der Formel

$$-(CH_2)_m(OCHR^1CH_2)_nOX$$

bevorzugt. In dieser Formel bedeutet $R^1$ Wasserstoff oder gleiche oder verschiedene Alkylreste mit 1 bis 4 Kohlenstoffatomen je Rest, vorzugsweise Wasserstoff, X Wasserstoff oder gleiche oder verschiedene Alkylreste mit 1 bis 4 Kohlenstoffatomen je Rest oder gleiche oder verschiedene Acylreste mit 1 bis 5 Kohlenstoffatomen, vorzugsweise höchstens 3 Kohlenstoffatomen, je Rest, m 2, 3, 4, 5 oder 6,

vorzugsweise 3, und n eine ganze Zahl im Wert von 1 bis 30, insbesondere 3, 4, 5 oder 6. Vorzugsweise bedeutet X Wasserstoff oder einen Acylrest, insbesondere den Acetylrest.

Vorzugsweise liegen in den erfindungsgemäßen, erfindungsgemäß hergestellten und erfindungsgemäß verwendeten Organopolysiloxanen durchschnittlich mindestens 0,5 SiC-gebundene Oxyalkyleneinheiten, insbesondere durchschnittlich mindestens eine SiC-gebundene Oxyalkyleneinheit und, ganz besonders bevorzugt, durchschnittlich 3 bis 6 SiC-gebundenen Oxyalkyleneinheiten, je Si-Atom in diesen Organopolysiloxanen vor. Weiterhin ist bevorzugt, daß höchstens ein organischer Rest mit mindestens einer Oxyalkyleneinheit an ein Siliciumatom gebunden ist und daß die SiC-gebundenen, einwertigen Reste mit Oxyalkyleneinheiten in $R_2SiO$- bzw. $R_2Si(OH)O_{1/2}$-Einheiten vorliegen.

Beispiele für andere SiC-gebundene, einwertige organische Reste als solche mit Oxyalkyleneinheiten in den erfindungsgemäßen, erfindungsgemäß hergestellten und erfindungsgemäß verwendeten Organopolysiloxanen sind insbesondere Alkylreste mit 1 bis 8 Kohlenstoffatomen je Rest, wie der Methyl-, Ethyl-, n-Propyl- und Isopropylrest sowie Butyl- und Octylreste; aliphatische Reste mit olefinischer Doppelbindung und 1 bis 8 Kohlenstoffatomen je Rest, wie der Vinyl-, Allyl- und Methallylrest; Cycloalkylreste mit 5 bis 8 Kohlenstoffatomen je Rest, wie der Cyclohexylrest oder Methylcyclohexylreste; der Phenylrest; Alkarylreste mit 7 oder 8 Kohlenstoffatomen je Rest, wie Tolylreste; und Alkarylreste mit 7 oder 8 Kohlenstoffatomen je Rest, wie der Benzylrest. Schon wegen der leichteren Zugänglichkeit sind jedoch vorzugsweise mindestens 80 % der Anzahl der

anderen SiC-gebundenen, einwertigen organischen Reste als solche mit Oxyalkyleneinheiten in den erfindungsgemäßen, erfindungsgemäß hergestellten und erfindungsgemäß verwendeten Organopolysiloxanen Methylreste.

Vorzugsweise enthalten die erfindungsgemäßen, erfindungsgemäß hergestellten und erfindungsgemäß verwendeten Organopolysiloxane durchschnittlich 3 bis 1000 Siliciumatome je Molekül, insbesondere mindestens 20 Siliciumatome je Molekül, und mindestens zwei Si-gebundene Hydroxylgruppen je Molekül.

Gegenstand der Erfindung ist weiterhin ein Verfahren zur Herstellung von Organopolysiloxanen mit SiC-gebundenen Oxyalkyleneinheiten und Si-gebundenen Hydroxylgruppen, die durchschnittlich mindestens 15 Molprozent Siloxaneinheiten mit nur einem SiC-gebundenen, einwertigen organischen Rest enthalten, wobei die anders als durch diesen Rest abgesättigten Siliciumvalenzen durch Siloxansauerstoffatome oder Sauerstoffatome von Hydroxylgruppen abgesättigt sind, dadurch gekennzeichnet, daß durch Triorganosiloxygruppen endblockiertes Diorgano(poly)siloxan, das SiC-gebundene Oxyalkyleneinheiten enthält, oder durch Triorganosiloxygruppen endblockiertes Mischpolymerisat aus derartigem Diorgano-(poly)siloxan und Siloxaneinheiten mit je einem SiC-gebundenen, einwertigen organischen Rest und einem Si-gebundenen Wasserstoffatom oder einer Si-gebundenen Hydroxylgruppe oder einer SiOC-gebundenen, je Gruppe 1 bis 4 Kohlenstoffatome aufweisenden Alkoxygruppe je solcher Siloxaneinheit mit Wasser in Gegenwart von Base oder Säure umgesetzt und, wenn das bei dieser Umsetzung erhaltene Organopolysiloxan noch nicht genügend Siloxaneinheiten mit nur einem SiC-gebundenen, einwertigen organischen Rest, wobei die anders

als durch diesen Rest abgesättigten Siliciumvalenzen durch Siloxansauerstoffatome oder Sauerstoffatome von Hydroxylgruppen abgesättigt sind, enthält, gleichzeitig mit der Umsetzung mit Wasser oder anschließend zusätzlich mit Silan, an dessen Siliciumatom nur ein einwertiger organischer Rest SiC-gebunden ist, wobei die anders als durch diesen Rest abgesättigten Siliciumvalenzen durch hydrolysierbare Reste oder Halogenatome abgesättigt sind, oder Teilhydrolysat von derartigem Silan umgesetzt wird.

Durch Triorganosiloxygruppen endblockiertes Diorgano(poly)-siloxan, das SiC-gebundene Oxyalkyleneinheiten enthält, kann durch die Formel

$$R_3SiO(SiR_2O)_pSiR_3$$

wiedergegeben werden. In dieser Formel hat R die oben dafür angegebene Bedeutung und p ist eine ganze Zahl im Wert von mindestens 1. Derartige Organo(poly)siloxane sind z. B. durch in an sich bekannter Weise erfolgende Anlagerung eines Ethers der Formel

$$CH_2{=}CH(CH_2)_{m'}(OCHR^1CH_2)_nOX,$$

worin $R^1$ und X die oben dafür angegebene Bedeutung haben und m' 0, 1, 2, 3 oder 4, vorzugsweise 1 ist, an ein Organo(poly)siloxan der allgemeinen Formel

$$R^2_3\,SiO(SiR^2_2O)_{p'}(SiHR^2O)_qSiR^2_3$$

erhältlich, worin $R^2$ gleiche oder verschiedene andere SiC-gebundene, einwertige organische Reste als solche mit Oxyalkyleneinheiten der oben angegebenen Art, insbesondere Methylreste, bedeutet, p' 0 oder eine ganze Zahl im Wert von mindestens 1 ist, q eine ganze Zahl im Wert von mindestens 1 und p '+q gleich p ist. Diese Anlagerung wird im allgemeinen in Gegenwart eines Platin-Katalysators, wie $H_2PtCl_6 \cdot 6H_2O$, durchgeführt. Wenn bei dieser Anlagerung nur ein Teil der Si-gebundenen Wasserstoffatome mit dem Ether der oben angegebenen Formel umgesetzt wird, wird durch Triorganosiloxygruppen endblockiertes Mischpolymerisat aus Diorgano(poly)siloxan, das SiC-gebundene Oxyalkyleneinheiten enthält, und Siloxaneinheiten mit je einem SiC-gebundenen, einwertigen organischen Rest und einem Si-gebundenen Wasserstoffatom je solcher Siloxanheit erhalten. Werden während dieser Anlagerung Si-gebundene Wasserstoffatome nicht nur mit Ether der oben angegebenen Formel, sondern auch mit Wasser oder Alkanol mit 1 bis 4 Kohlenstoffatomen oder Wasser und Alkanol mit 1 bis 4 Kohlenstoffatomen umgesetzt, gegebenenfalls unter zusätzlicher Anwendung von Säure oder Base, so wird durch Triorganosiloxygruppen endblockiertes Mischpolymerisat aus Diorgano(poly)siloxan, das SiC-gebundene Oxyalkyleneinheiten enthält, und Siloxaneinheiten mit einem SiC-gebundenen Rest, wobei die nicht durch diesen Rest und ein Siloxansauerstoffatom abgesättigten Siliciumvalenzen durch das Sauerstoffatom einer Hydroxylgruppe oder einer Alkoxygruppe mit 1 bis 4 Kohlenstoffatomen je Rest oder gegebenenfalls Wasserstoff abgesättigt sind, erhalten.

Bei der Umsetzung von durch Trimethylsiloxygruppen endblockiertem Diorgano(poly)siloxan, das SiC-gebundene Oxyalkyleneinheiten enthält, oder von durch Triorganosiloxygruppen endblockiertem Mischpolymerisat aus derartigem Diorgano(poly)siloxan und Siloxaneinheiten mit je einem SiC-gebundenen, einwertigen organischen Rest und einem Si-gebundenem Wasserstoffatom oder einer Si-gebundenen Hydroxylgruppe oder einer SiOC-gebundenen, je Gruppe 1 bis 4 Kohlenstoffatome aufweisenden Alkoxygruppe je solcher Siloxaneinheit mit Wasser wird das Wasser vorzugsweise in Mengen von 0, 1 bis 20 Gewichtsprozent, insbesondere 1 bis 5 Gewichtsprozent, jeweils bezogen auf das Gewicht von mit Wasser umzusetzendem Organopolysiloxan, eingesetzt.

Als Säuren oder Basen, welche die Umsetzung von Wasser mit damit umzusetzendem Organopolysiloxan fördern, sind solche bevorzugt, welche nicht oder möglichst wenig äquilibrierend wirken, d. h. nicht oder möglichst wenig die Umlagerung von Siloxanbindungen fördern. Chlorwasserstoff und Natriumhydroxyd haben sich als sehr geeignet erwiesen. Säuren sind bevorzugt.

Säure bzw. Base wird vorzugsweise in Mengen von 0,05 bis 10 Gewichtsprozent, insbesondere 0,5 bis 2 Gewichtsprozent, jeweils bezogen auf das Gewicht von mit Wasser umzusetzendem Organopolysiloxan, eingesetzt.

Die Silane, an deren Siliciumatome nur ein einwertiger organischer Rest SiC-gebunden ist, wobei die anders als durch diesen Rest abgesättigten Siliciumvalenzen durch hydrolysierbare Reste oder Halogenatome abgesättigt sind, können durch die Formel

$$RSiY_3$$

wiedergegeben werden. In dieser Formel hat R die oben dafür angegebene Bedeutung und ist vorzugsweise der Methylrest; Y bedeutet Halogenatome, wie Chlor, Brom oder Jod, insbesondere Chlor, oder hydrolysierbare Reste, wie Alkoxygruppen mit 1 bis 4 Kohlenstoffatomen je Gruppe, oder Acyloxygruppen mit bis 4 Kohlenstoffatomen je Gruppe, wie die Acetoxygruppe. Bevorzugt als Y sind Alkoxygruppen, insbesondere Methoxy- oder Ethoxygruppen.

Die Umsetzung von Wasser mit damit umzusetzendem Organopolysiloxan sowie die gegebenenfalls erfolgende Umsetzung dieses Organopolysiloxans bzw. des bei der Umsetzung mit Wasser erhaltenen Organopolysiloxans mit Silan, an dessen Siliciumatom nur ein einwertiger organischer Rest SiC-gebunden ist, oder dessen Teilhydrolysat wird vorzugsweise bei 50°C bis 180°C, insbesondere bei 80° bis 120°C durchgeführt. Vorzugsweise wird diese Umsetzung bzw. werden diese Umsetzungen beim Druck der umgebenden Atmosphäre also bei 1010 mbar (abs.) oder etwa 1010 mbar (abs.) durchgeführt. Falls erwünscht, können aber auch höhere oder niedrigere Drücke angewandt werden.

Wird erfindungsgemäßes oder erfindungsgemäß verwendetes Organopolysiloxan unter zusätzlicher Verwendung von Silan oder dessen Teilhydrolysat oder Silan und dessen Teilhydrolysat nach dem oben angegebenen Verfahren hergestellt, so erfolgt dies vorzugsweise in Gegenwart von gegenüber den Reaktionsteilnehmern inertem Lösungsmittel, wobei als mindestens ein Teil vom Lösungsmittel solches verwendet wird, in dem alle Reaktionsteilnehmer löslich sind. Beispiele für gegenüber den Reaktionsteilnehmern inerte Lösungsmittel, in denen alle Reaktionsteilnehmer löslich sind, sind bzw. können sein Tetrahydrofuran, Isopropanol

und Aceton, wobei Tetrahydrofuran besonders bevorzugt ist. Ein Beispiel für ein weiteres Lösungsmittel, das bei der Herstellung von erfindungsgemäßem oder erfindungsgemäß verwendetem Organopolysiloxan nach dem erfindungsgemäßen Verfahren mitverwendet werden kann, ist Toluol.

Vorzugsweise wird Lösungsmittel in Mengen von 10 bis 50 Gewichtsprozent, bezogen auf das Gesamtgewicht von Wasser, mit Wasser umzusetzendem Organopolysiloxan und Silan bzw. dessen Teilhydrolysat, eingesetzt.

Vorzugsweise werden die erfindungsgemäßen und die erfindungsgemäß verwendeten Organopolysiloxane nach dem erfindungsgemäßen Verfahren hergestellt.

Gegenstand der Erfindung ist schließlich auch ein Verfahren zum Hydrophilieren von Textilfasern durch Auftragen von Organopolysiloxan mit SiC-gebundenen Oxyalkyleneinheiten und Si-gebundenen Hydroxylgruppen auf die hydrophil zu machenden Fasern, dadurch gekennzeichnet, daß als Organopolysiloxan mit SiC-gebundenen Oxyalkyleneinheiten und Si-gebundenen Hydroxylgruppen solches mit durchschnittlich mindestens 15 Molprozent Siloxaneinheiten mit nur einem SiC-gebundenen, einwertigen organischen Rest, wobei die anders als durch diesen Rest abgesättigten Siliciumvalenzen durch Siloxansauerstoffatome oder Sauerstoffatome von Hydroxylgruppen abgesättigt sind, verwendet werden.

Mit dem erfindungsgemäßen Verfahren zum Hydrophilieren von Textilfasern können beliebige Textilfasern hydrophil gemacht werden. Es kann sich dabei um natürliche oder synthetische Fasern, wie solche aus Keratin, Baumwolle, Rayon,

Hanf, natürliche Seide, Polypropylen, Polyethylen, Polyester, Polyurethan, Polyamid, Celluloseacetat oder Gemische aus solchen Fasern, handeln. Die Fasern können als Fäden, Garne, Vliese, Matten, Gewebe, gestrickte oder gewirkte Textilien, einschließlich Kleidungsstücken oder Teilen von Kleidungsstücken, vorliegen. Auch bei Fasern, die ihrer Natur nach hydrophil sind, wie Baumwolle oder anderen Cellulosearten in Form von Fasern, kann die Anwendung des erfindungsgemäßen Verfahrens zum Hydrophibieren von Textilfasern sinnvoll sein. Dies kann z. B. dann der Fall sein, wenn solche Fasern, beispielsweise durch eine "Knitterfrei-Ausrüstung" ihre hydrophilen Eigenschaften teilweise verlieren würden bzw. verloren haben.

Das Auftragen der erfindungsgemäßen und erfindungsgemäß verwendeten und vorzugsweise auch erfindungsgemäß hergestellten Organopolysiloxane auf die hydrophil zu machenden Fasern kann in beliebiger für die Behandlung von Fasern mit Flüssigkeiten geeigneter und vielfach bekannter Weise, z. B. durch Tauchen, Streichen, Gießen, Sprühen, einschließlich Sprühen aus Aerosolpackungen, Walzen oder Klotzen, erfolgen.

Bei dem erfindungsgemäßen Verfahren zum Hydrophilieren von Textilfasern werden die dabei verwendeten Organosiliciumverbindungen vorzugsweise in Form von wäßrigen Lösungen oder wäßrigen Emulsionen angewendet. Falls erwünscht oder erforderlich, können die bei dem erfindungsgemäßen Verfahren zum Hydrophilieren von Textilfasern verwendeten Organosiliciumverbindungen aber auch in Form in Lösungen in gegenüber diesen Organosiliciumverbindungen inerten organischen Lösungsmitteln, wie Toluol, Gemischen von Xylolisomeren, Perchlorethylen oder Alkangemischen mit einem Siedebereich von 135°C bis 180°C bei 1013 mbar (abs.) eingesetzt werden.

Vorzugsweise beträgt die Gewichtszunahme der Faser nach dem erfindungsgemäßen Verfahren zum Hydrophilieren von Textilfasern und Verdampfen des Mediums, wie Wasser, 0,1 bis 20 Gewichtsprozent, insbesondere 0,5 bis 3 Gewichtsprozent, jeweils bezogen auf das Gewicht der Faser vor der Behandlung.

Vorzugsweise werden die erfindungsgemäßen und erfindungsgegemäß verwendeten und vorzugsweise auch erfindungsgemäß hergestellten Organopolysiloxane auf den Fasern, auf denen sie aufgetragen wurden, durch Kondensation vernetzt, was aber zumindest bei Hydroxylgruppen enthaltenden Fasern, wie Baumwolle, nicht unbedingt erforderlich ist, weil eine Verankerung der erfindungsgemäßen Organopolysiloxane auf den Fasern auch durch Reaktion der Si-gebundenen Hydroxylgruppen der erfindungsgemäßen Organopolysiloxane mit den Hydroxylgruppen der Faser möglich ist.

Als Vernetzer für die Vernetzung der erfindungsgemäßen Organopolysiloxane sind Silane der Formel

$$R^3_aSi\left[(OCH_2CR^1H)_{n'}OX\right]_{4-a}$$

und deren Teilhydrolysate bevorzugt. In dieser Formel haben $R^1$ und X die oben dafür angegebene Bedeutung mit der Maßgabe, daß wenn X Wasserstoff ist, n' mindestens 1 ist, n' ist 0 oder eine ganze Zahl im Wert von 1 bis 30, a ist 0, 1 oder 2, vorzugsweise 1, und $R^3$ ist ein durch mindestens eine Amino- bzw. Iminogruppe substituierter Alkylrest oder

hat die gleiche Bedeutung wie $R^1$.

Einzelne Beispiele für derartige Silane sind Methyltriacetoxysilan, Methyltrimethoxysilan, Methyltriethoxysilan und Silane der Formeln

$$H_2N(CH_2)_2HN(CH_2)_3Si(OCH_3)_3$$
$$CH_3Si(OCH_2CH_2OCH_3)_3$$
$$CH_3O(CH_2CH_2O)_6(CH_2)_3Si(OCH_3)_3.$$

Werden zusätzlich zu den erfindungsgemäßen Organopolysiloxanen bei dem erfindungsgemäßen Verfahren zum Hydrophilieren von Textilfasern Vernetzer mitverwendet, so werden sie vorzugsweise in Mengen von 3 bis 30 Gewichtsprozent, bezogen auf das Gewicht der jeweils eingesetzten Menge von erfindungsgemäßem Organopolysiloxan, eingesetzt.

Die Vernetzer können vor, gleichzeitig mit oder nach den erfindungsgemäßen Organopolysiloxanen auf die hydrophil zu machenden Fasern aufgetragen werden. Vorzugsweise werden sie gleichzeitig mit den erfindungsgemäßen Organopolysiloxanen, getrennt oder im Gemisch mit diesen Organopolysiloxanen, insbesondere im Gemisch mit den erfindungsgemäßen Organopolysiloxanen, auf die hydrophil zu machenden Fasern aufgetragen.

Als Katalysatoren für die Vernetzung der erfindungsgemäßen Organopolysiloxane können beliebige Katalysatoren für die Kondensation von Si-gebundenen kondensationsfähigen Gruppen eingesetzt werden. Beispiele für solche Katalysatoren sind

insbesondere Carbonsäuresalze von Zinn oder Zink, wobei an diesen Metallen Kohlenwasserstoffreste direkt gebunden sein können, wie Dibutylzinndilaurat, Zinnoctoate, Di-2-ethylhexylzinndilaurat und Zinkoctoate. Weitere Beispiele für Katalysatoren, welche die Kondensation von Si-gebundenen kondensationsfähigen Gruppen fördern, sind Alkoxytitanate, Tetra-n-butyltitanat, Triethanolamintitanat und Zirkoniumverbindungen.

Werden zusätzlich zu den erfindungsgemäßen Organopolysiloxanen und gegebenenfalls Vernetzer bei dem erfindungsgemäßen Verfahren zum Hydrophilieren von Textilfasern Katalysatoren für die Kondensation von Si-gebundenen kondensationsfähigen Gruppen mitverwendet, so werden sie vorzugsweise in Mengen von 3 bis 30 Gewichtsprozent, bezogen auf das Gewicht der jeweils eingesetzten Mengen von erfindungsgemäßem Organopolysiloxan, eingesetzt.

Eine befriedigende Verankerung der erfindungsgemäßen Organopolysiloxane auf den hydrophil zu machenden Fasern erfolgt bereits bei Raumtemperatur innerhalb von 5 Stunden bis 5 Tagen. Sie kann durch Erwärmen auf z. B. 50° bis 180°C beträchtlich beschleunigt werden.

Zusätzlich zu erfindungsgemäßem Organopolysiloxan, Verdünnungsmittel für dieses Organopolysiloxan, wie Wasser, gegebenenfalls mitverwendetem Vernetzungsmittel und gegebenenfalls mitverwendetem Katalysator können bei dem erfindungsgemäßen Verfahren gegebenenfalls weitere Textilausrüstungsmittel mitverwendet werden. Ein Beispiel für solche weiteren Textilausrüstungsmittel ist Dimethyloldihydroxyethylenharnstoff (DMDHEU) im Gemisch mit Zinknitrat, das vorzugsweise bei der Behandlung von Cellulosefasern mitverwendet wird.

In den folgenden Beispielen beziehen sich alle Angaben von Teilen und Prozentsätzen auf das Gewicht, soweit nichts anderes angegeben ist.

Beispiel 1

a) Eine Mischung aus 2095 g (9.03 Mol) des Allylpolyglykols der Formel

$$CH_2{=}CHCH_2(OCH_2CH_2)_3OCOCH_3,$$

350 g Tetrahydrofuran, 350 g Aceton und 350 g Isopropanol wird nach Vermischen mit 42 g einer 1 %igen Lösung von Platin, berechnet als Element, in Form von $H_2PtCl_6.6H_2O$ in Isopropanol zum Sieden unter Rückfluß (etwa 90°C) erwärmt und innerhalb einer Stunde tropfenweise mit 522 g (8,4 Mol) $(CH_3)_3Si(OSiHCH_3)_{70}Si(CH_3)_3$ in 500 ml Toluol versetzt. Nach einer weiteren Stunde Erwärmen zum Sieden unter Rückfluß sind gemäß dem $^1H$-NMR-Spektrum alle Si-gebundenen Wasserstoffatome verschwunden.

b) Die gemäß a) hergestellte Lösung wird mit 243 g konzentrierter Salzsäure (2,53 Mol HCl) und unmittelbar danach mit 87 g (0,49 Mol) Methyltriethoxysilan vermischt und eine Stunde zum Sieden unter Rückfluß erwärmt. Anschließend wurden 150 g Magnesiumoxyd zu der Mischung gegeben, um die Säure zu neutralisieren. Nach dem Filtrieren werden die Lösungsmittel bei 80°C und 2 mbar (abs.) abdestilliert.

Es werden 2.460 g einer hellgelben, klaren Flüssigkeit mit

einer Viskosität von 400 mPa.s bei 25°C erhalten.

Gemäß dem $^{29}$Si-NMR-Spektrum enthält das Organopolysiloxan 20 Molprozent Siloxaneinheiten mit nur einem SiC-gebundenen Methylrest.

Beispiel 2

a) 1600 g (4,4 Mol) des Allylpolyglykols der Formel

$$CH_2{=}CHCH_2(OCH_2CH_2)_6OCOCH_3,$$

werden nach Vermischen mit 23 g der 1 %igen Lösung von Platin, berechnet als Element, in Form von $H_2PtCl_6 \cdot 6H_2O$ in Isopropanol und 0,5 g (0,28 Mol) Wasser auf 100°C erwärmt, innerhalb einer Stunde tropfenweise mit 240 g (4 Mol) $(CH_3)_3Si(OHCH_3)_{70}OSi(CH_3)_3$ in 500 ml Toluol versetzt. Nach einer weiterenStunde Erwärmen zum Sieden unter Rückfluß sind gemäß dem $^1$H-NMR-Spektrum alle Si-gebundenen Wasserstoffatome verschwunden.

b) Zu 900 g Organopolysiloxan in Form der Lösung, deren Herstellung vorstehend beschrieben wurde, werden 51,5 g 1-n-Salzsäure (0,051 Mol HCl) gegeben. Die so erhaltene Mischung wird 2 Stunden bei 90°C gerührt. Anschließend werden 10 g Magnesiumoxyd zu der Mischung gegeben, um die Säure zu neutralisieren. Nach dem Filtrieren werden die Lösungsmittel bei 80°C und 2 mbar (abs). abdestilliert. Es werden 660 g einer bräunlichen, klaren Flüssigkeit mit einer Viskosität von 250 mPa.s bei 25°C erhalten.

Gemäß dem $^{29}$Si-NMR-Spektrum enthält das Organopolysiloxan 30 Molprozent Siloxaneinheiten mit nur einem SiC-gebundenen Methylrest.

Beispiel 3

a) 35 Teile des Organopolysiloxans mit SiC-gebundenen Oxyalkyleneinheiten und Si-gebundenen Hydroxylgruppen, dessen Herstellung in Beispiel 1 unter b) beschrieben wurde, werden in einer aus 3 Teilen einer 30 %igen Lösung eines als Emulgator handelsüblichen Alkylsulfonats ("Mersolat", wobei es sich um ein registriertes Warenzeichen handeln dürfte) in Wasser und 62 Teilen Wasser bereiteten Mischung dispergiert.

b) In eine wäßrige Dispersion, die 57 g/l der Emulsion enthält, deren Herstellung vorstehend unter a) beschrieben wurde, und die also noch stärker verdünnt ist als die Emulsion, deren Herstellung vorstehend unter a) beschrieben wurde, wird ein Gewebe getaucht, dessen Kettfäden aus 100 %-Polyester-Stapelfasergarn und dessen Schußfäden aus 100 % Polyester-Filamentgarn bestehen. Dann wird das Gewebe auf 100 % Flüssigkeitsaufnahme abgequetscht, so daß die Gewichtszunahme des Gewebes nach dem Trocknen 2 %, bezogen auf das Gewicht des Gewebes vor der Behandlung, beträgt, und 3 Minuten

auf 150°C erwärmt. Das so behandelte Gewebe hat einen weichen, elastischen Griff.

Die Benetzbarkeit wird nach AATCC 39-1977 geprüft. Bei dieser Prüfung werden aus einer Bürette 3 Wassertropfen auf das in einen Rahmen gespannte Gewebe aufgetragen und es wird die Zeit bis zum Eindringen der Wassertropfen in das Gewebe gemessen. Diese Zeit wird als "Benetzungszeit" bezeichnet.

Das Waschen der Gewebe bei 60°C erfolgt in einer Haushaltwaschmaschine mit einem handelsüblichen Waschmittel. Nach dem Waschen wird jeweils gründlich mit Wasser gespült, um mögliche hydrophile Waschmittelreste zu entfernen.

Es werden folgende Ergebnisse erhalten:

| | | | |
|---|---|---|---|
| Anzahl der 60°C-Wäschen | 0 | 1 | 2 |
| Benetzungszeit Sekunden | 18 | 65 | 101 |

Beispiel 4

Die in Beispiel 3 unter b) beschriebene Arbeitsweise wird wiederholt mit der Abänderung, daß der Dispersion, in die das Gewebe getaucht wird, vor dessen Tauchen, zusätzlich 6 %, bezogen auf das Gewicht vom Organopolysiloxan, Silan der Formel

$$H_2N(CH_2)_2NH(CH_2)_3Si(OCH_3)_3$$

und 4,5 %, bezogen auf das Gewicht vom Organopolysiloxan,

0111933

Triethanolamintitanat zugesetzt werden. Das so behandelte Gewebe hat einen weichen, elastischen Griff. Es werden hinsichtlich der Benetzbarkeit folgende Ergebnisse erhalten:

| | | | |
|---|---|---|---|
| Anzahl der 60°C-Wäschen | 0 | 1 | 2 |
| Benetzungszeit Sekunden | 21 | 20 | 23 |

Beispiel 5

a) Die in Beispiel 3 unter a) beschriebene Arbeitsweise wird wiederholt mit den Abänderungen, daß als Organopolysiloxan mit SiC-gebundenen Oxyalkyleneinheiten und Si-gebundenen Hydroxylgruppen 35 Teile solches, dessen Herstellung in Beispiel 2 unter b) beschrieben wurde, mit 65 Teilen Wasser anstelle der Mischung aus 3 Teilen Emulgatorlösung und 62 Teilen Wasser verwendet werden und keine Emulsion, sondern eine Lösung hergestellt wird.

b) Die in Beispiel 3 unter b) beschriebene Arbeitsweise wird wiederholt mit den Abänderungen, daß anstelle der dort verwendeten Emulsion die gemäß vorstehend unter a) hergestellte Lösung verwendet und dieser Lösung zusätzlich 6 %, bezogen auf das Gewicht vom Organopolysiloxan, Silan der Formel

$$CH_3Si(OCH_2CH_2OCH_3)_3$$

und 4,5 %, bezogen auf das Gewicht vom Organopolysiloxan, Triethanolamintitanat zugesetzt werden. Das so behandelte Gewebe hat einen weichen, elastischen Griff. Es werden hinsichtlich der Benetzbarkeit folgende Ergebnisse erhalten:

| | | | | | | |
|---|---|---|---|---|---|---|
| Anzahl der 60°C-Wäschen | 0 | 1 | 2 | 3 | 4 | 5 |
| Benetzungszeit Sekunden | 20 | 23 | 25 | 27 | 26 | 28 |

Beispiel 6

In eine wäßrige Lösung von

60 g/l einer 45 %igen wäßrigen Lösung von DMDHEU

12 g/l Zinknitrat

10 g/l gemäß Beispiel 2b) hergestelltes Organopolysiloxan

wird ein Gewebe aus 35 % Baumwolle und 65 % Polyester getaucht, dann auf 100 % Flüssigkeitsaufnahme abgequetscht und schließlich 10 Minuten auf 150°C erwärmt. Das so behandelte Gewebe hat einen weichen,elastischen Griff. Es werden hinsichtlich der Benetzbarkeit folgende Ergebnisse erhalten:

| | | | | | | |
|---|---|---|---|---|---|---|
| Anzahl der 60°C-Wäschen | 0 | 1 | 2 | 3 | 4 | 5 |
| Benetzungszeit Sekunden | 3 | 6 | 6 | 7 | 6 | 5 |

Beispiel 7

In eine wäßrige Lösung von

100 g/l einer 45 %igen wäßrigen Lösung von DMDHEU

20 g/l Zinknitrat

15 g/l gemäß Beispiel 2b) hergestelltes Organopolysiloxan

wird ein Gewebe aus 100 % Baumwolle getaucht, dann auf 100 % Flüssigkeitsaufnahme abgequetscht und schließlich 10 Minuten auf 150°C erwärmt. Das Gewebe hat einen weichen, elastischen Griff. Hinsichtlich der Benetzbarkeit werden folgende Ergebnisse erhalten:

| | | | | | | |
|---|---|---|---|---|---|---|
| Anzahl der 60°C-Wäschen | 0 | 1 | 2 | 3 | 4 | 5 |
| Benetzungszeit Sekunden | 4 | 2 | 3 | 2 | 2 | 2 |

Vergleichsversuch (in Übereinstimmung mit DE-OS 30 39 721)

In eine wäßrige Lösung von

15 g/l eines in den endständigen Einheiten je eine Si-gebundene Hydroxylgruppe aufweisenden Organopolysiloxans aus 6,7 Molprozent Vinylmethylsiloxaneinheiten, 60 Molprozent [Acetoxy(hexaethylenoxy)-propyl] methylsiloxaneinheiten und 33,3 Molprozent Dimethylsiloxaneinheiten

5 g/l eines in den endständigen Einheiten je eine Si-gebundene Hydroxylgruppe aufweisenden Organopolysiloxans aus 33,3 Molprozent Methylhydrogensiloxaneinheiten, 33,3 Molprozent [Acetoxy(hexaethylenoxy) propyl] methylsiloxaneinheiten und 33,3 Molprozent Dimethylsiloxaneinheiten

1 g/l einer 1 % Platin, berechnet als Element, in Form von $PtCl_4$ enthaltenden wäßrigen Lösung

wird Gewebe der gleichen Art wie derjenigen des Gewebes von Beispiel 3 getaucht, dannauf 100 % Flüssigkeitsaufnahme abgequetscht und schließlich 10 Minuten auf 150°C erwärmt. Es werden hinsichtlich der Benetzbarkeit folgende Ergebnisse erhalten:

| Anzahl der 60°C-Wäschen | 0 | 1 | 2 | 3 | 4 | 5 |
|---|---|---|---|---|---|---|
| Benetzungszeit Sekunden | 80 | 140 | 180 | 270 | >300 | >300 |
| Benetzungszeit bei Gewebe ohne Ausrüstung | >300 | >300 | >300 | >300 | >300 | >300 |

Patentansprüche: (für die Vertragsstaaten Belgien, Frankreich, Holland, England, Italien, Schweden und Schweiz)

1. Organopolysiloxane mit SiC-gebundenen Oxyalkyleneinheiten und Si-gebundenen Hydroxylgruppen, dadurch gekennzeichnet, daß sie durchschnittlich mindestens 15 Molprozent Siloxaneinheiten mit nur einem SiC-gebundenen, einwertigen organischen Rest, wobei die anders als durch diesen Rest abgesättigten Siliciumvalenzen durch Siloxansauerstoffatome oder Sauerstoffatome von Hydroxylgruppen abgesättigt sind, enthalten.

2. Organopolysiloxane nach Anspruch 1, dadurch gekennzeichnet, daß sie durchschnittlich höchstens 60 Molprozent Siloxaneinheiten mit nur einem SiC-gebundenen, einwertigen organischen Rest, wobei die anders als durch diesen Rest abgesättigten Siliciumvalenzen durch Siloxansauerstoffatome oder Sauerstoffatome von Hydroxylgruppen abgesättigt sind, enthalten.

3. Verfahren zur Herstellung von Organopolysiloxanen nach Anspruch 1 oder 2, dadurch gekennzeichnet, daß durch Triorganosiloxygruppen endblockiertes Diorgano(poly)siloxan, das SiC-gebundene Oxyalkyleneinheiten enthält, oder durch Triorganosiloxygruppen endblockiertes Mischpolymerisat aus derartigem Diorgano(poly)siloxan und Siloxaneinheiten mit je einem SiC-gebundenen, einwertigen organischen Rest und einem Si-gebundenen Wasserstoffatom oder einer Si-gebundenen Hydroxylgruppe oder einer SiOC-gebundenen, je Gruppe 1 bis 4 Kohlenstoffatome aufweisenden Alkoxygruppe je solcher Siloxaneinheit mit Wasser in Gegenwart von Base oder Säure umgesetzt und, wenn das bei dieser

Umsetzung erhaltene Organopolysiloxan noch nicht genügend Siloxaneinheiten mit nur einem SiC-gebundenen, einwertigen organischen Rest, wobei die anders als durch diesen Rest abgesättigten Siliciumvalenzen durch Siloxansauerstoffatome oder Sauerstoffatome von Hydroxylgruppen abgesättigt sind, enthält, gleichzeitig mit der Umsetzung mit Wasser oder anschließend zusätzlich mit Silan, an dessen Siliciumatom nur ein einwertiger organischer Rest SiC-gebunden ist, wobei die anders als durch diesen Rest abgesättigten Siliciumvalenzen durch hydrolysierbare Reste oder Halogenatome abgesättigt sind, oder Teilhydrolysat von derartigem Silan umgesetzt wird.

4. Verfahren nach Anspruch 3, dadurch gekennzeichnet, daß Wasser in Mengen von 0,1 bis 20 Gewichtsprozent, bezogen auf das Gewicht von mit Wasser umzusetzendem Organopolysiloxan, eingesetzt wird.

5. Verfahren nach Anspruch 3 oder 4, dadurch gekennzeichnet, daß Säure bzw. Base in Mengen von 0,05 bis 10 Gewichtsprozent, bezogen auf das Gewicht von mit Wasser umzusetzendem Organopolysiloxan, eingesetzt wird.

6. Verfahren nach mindestens einem der Ansprüche 3 bis 5, dadurch gekennzeichnet, daß die Umsetzung in Gegenwart von Chlorwasserstoff als Säure durchgeführt wird.

7. Verfahren zum Hydrophilieren von Textilfasern durch Auftragen von Organopolysiloxan mit SiC-gebundenen Oxyalkyleneinheiten und Si-gebundenen Hydroxylgruppen auf die hydrophil zu machenden Fasern, dadurch gekennzeichn e t , daß als Organopolysiloxan mit SiC-gebundenen Oxyalkyleneinheiten und Si-gebundenen Hydroxylgruppen solches gemäß Anspruch 1 oder 2 verwendet wird.

8. Verfahren nach Anspruch 7, d a d u r c h g e k e n n - z e i c h n e t , daß ein Mittel zur Erzielung einer "Knitterfrei-Ausrüstung" mitverwendet wird.

Patentansprüche für den Vertragsstaat Österreich:

1. Verfahren zur Herstellung von Organopolysiloxanen mit SiC-gebundenen Oxyalkyleneinheiten und Si-gebundenen Hydroxylgruppen, dadurch gekennzeichnet, daß durch Triorganosiloxygruppen endblockiertes Diorgano(poly)siloxan, das SiC-gebundene Oxyalkyleneinheiten enthält, oder durch Triorganosiloxygruppen endblockiertes Mischpolymerisat aus derartigem Diorgano(poly)siloxan und Siloxaneinheiten mit je einem SiC-gebundenen, einwertigen organischen Rest und einem Si-gebundenen Wasserstoffatom oder einer Si-gebundenen Hydroxylgruppen oder einer SiOC-gebundenen, je Gruppe 1 bis 4 Kohlenstoffatome aufweisenden Alkoxygruppe je solcher Siloxaneinheiten mit Wasser in Gegenwart von Base oder Säure umgesetzt und, wenn das bei dieser Umsetzung erhaltene Organopolysiloxan noch nicht durchschnittlich mindestens 15 Molprozent Siloxaneinheiten mit nur einem SiC-gebundenen, einwertigen organischen Rest, wobei die anders als durch diesen Rest abgesättigten Siliciumvalenzen durch Siloxansauerstoffatome oder Sauerstoffatome von Hydroxylgruppen abgesättigt sind, enthält, gleichzeitig mit der Umsetzung mit Wasser oder anschließend zusätzlich mit Silan, an dessen Siliciumatom nur ein einwertiger organischer Rest SiC-gebunden ist, wobei die anders als durch diesen Rest abgesättigten Siliciumvalenzen durch hydrolysierbare Reste oder Halogenatome abgesättigt sind, oder Teilhydrolysat von derartigem Silan umgesetzt wird.

2. Verfahren nach Anspruch 1, dadurch gekennzeichnet, daß Wasser in Mengen von 0,1 bis 20 Gewichtsprozent, bezogen auf das Gewicht von mit Wasser umzusetzendem Organopolysiloxan, eingesetzt wird.

3. Verfahren nach Anspruch 1 oder 2, dadurch gekennzeichnet, daß Säure bzw. Base in Mengen von 0,05 bis 10 Gewichtsprozent, bezogen auf das Gewicht von mit Wasser umzusetzendem Organopolysiloxan, eingesetzt wird.

4. Verfahren nach mindestens einem der Ansprüche 1 bis 3, dadurch gekennzeichnet, daß die Umsetzung in Gegenwart von Chlorwasserstoff als Säure durchgeführt wird.

5. Verfahren zum Hydrophilieren von Textilfasern durch Auftragen von Organopolysiloxan mit SiC-gebundenen Oxyalkyleneinheiten und Si-gebundenen Hydroxylgruppen auf die hydrophil zu machenden Fasern, dadurch gekennzeichnet, daß als Organopolysiloxan mit SiC-gebundenen Oxyalkyleneinheiten und Si-gebundenen Hydroxylgruppen solches, das gemäß Anspruch 1 hergestellt wurde, verwendet wird.

6. Verfahren nach Anspruch 5, dadurch gekennzeichnet, daß ein Mittel zur Erzielung einer "Knitterfrei-Ausrüstung" mitverwendet wird.